# EUROPEAN PATENT APPLICATION

(11) **EP 4 398 678 A1**
(43) Date of publication of application: **10.07.2024**
(21) Application number: 23461502.9
(22) Date of filing: 04.01.2023
(51) Int. Cl.: H05B 3/06, H05B 3/26, B64D 11/02

(54) **HEATER ASSEMBLY**

(71) Applicant: Goodrich Corporation, Charlotte, NC 28277 (US)
(72) Inventor: Kroczek, Piotr Jacek, 51-317 Wroclaw (PL); SAPIJA, Dariusz Celestyn, 51-317 Wroclaw (PL)
(74) Representative: Dehns

(57) **Abstract**

A heater assembly comprising three discrete components assembled in a stack, the three discrete components comprising: a printed circuit board, pcb, (200) on which are provided electrically conductive tracks (230) which generate heat when electric power is applied to the tracks, the pcb having a first major surface (200a) and a second, opposite, major surface (200b) and a periphery joining the first and second major surfaces; a heat reflective plate (300); and a heater assembly housing (400); wherein the heat reflective plate is sandwiched between the pcb and the heater assembly housing and where the heater assembly housing is configured to fit over the heat reflective plate and the periphery of the pcb to form a closely fitted stack of the three discrete components.

## Description

### TECHNICAL FIELD

The present disclosure is concerned with providing an assembly, and, in particular a heater assembly, such as for ports in a water system, such as the fill and overflow ports of a water system. The water system can, for example, be a system for providing potable or fresh water in an aircraft.

### BACKGROUND

Water systems often include a tank or storage vessel to store water which can then be plumbed to other parts of the system to provide water to different parts of the system from the storage tank/vessel. The tank will need to be periodically re-filled. Typically, the tank is provided with a fill port to which a fill line, connected to a source of water, is connected for re-filling the tank from the source. The tank may also be provided with an overflow or overfill line via which water can exit the tank if the tank is overfilled. The overflow water exits from an overflow port on the tank. During the tank filling process, the fill port, and, where present, the overflow port, will be open. In some applications, the ports are left open after filling. The ports may be provided in an operating panel that is covered by a door or panel when not in use. In certain environments, e.g. where the tank is subjected to movement or vibration or in environments where debris or contaminants exits which should not be allowed to get into the tank, a closure or cap assembly is provided at the ports to close the port(s) when not being filled. In an arrangement with a fill port and an overflow port, each port may be provided with its own cap or closure or, alternatively, a single closure can be provided that covers both ports, when closed. Such assemblies may be used, for example, in aircraft. An aircraft typically has water stations in the cabin for dispensing drinking water during flight. The aircraft has a storage tank filled with potable water and plumbing to provide water from the tank to the stations as required. The tank is re-filled between flights by ground crew, by connecting an external source of water, e.g. a water truck, to the tank via a hose connected to the fill line attached to the fill port.

Because such assemblies are often located in places where they are subject to extreme environmental conditions, e.g. on the outside of an aircraft, where temperatures can be very low, there is a risk of water in and around the ports freezing. Heaters are typically provided on the assembly to heat the housing and/or ports.

Whilst existing assemblies are effective in heating the ports, there is a need for a more efficient heating assembly.

### SUMMARY

According to the disclosure, there is provided a heater assembly comprising three discrete components assembled in a stack, the three discrete components comprising: a printed circuit board, pcb, on which are provided electrically conductive tracks which generate heat when electric power is applied to the tracks, the pcb having a first major surface and a second, opposite, major surface and a periphery joining the first and second major surfaces; a heat reflective plate; and a heater assembly housing; wherein the heat reflective plate is sandwiched between the pcb and the heater assembly housing and where the heater assembly housing is configured to fit over the heat reflective plate and the periphery of the pcb to form a closely fitted stack of the three discrete components.

Also provided is a fill port assembly having such a heater assembly, and a method of assembling a heater assembly to a fill port assembly.

### BRIEF DESCRIPTION

Examples of the assembly according to this disclosure will be described by way of example only and with reference to the drawings. It should be noted that variations are possible within the scope of the claims.
Figure 1 is a perspective view of an example of a known assembly for a fill port and an overflow port of a water system.
Figure 2 is a side view of a known assembly such as shown in Fig. 1.
Figure 3 is a partly exploded view of an assembly according to this disclosure.
Figure 4 is a view of one part of a heater assembly of an assembly such as shown in Fig. 3.
Figure 5 is a view of another part of a heater assembly of an assembly such as shown in Fig. 3.
Figure 6 is a view of another part of a heater assembly of an assembly such as shown in Fig. 3.
Figures 7A and 7B show, respectively, side views of an assembly according to the disclosure, before and after heating.
Figures 8A and 8B show, respectively, a known assembly and an assembly according to the disclosure, for comparison.

### DETAILED DESCRIPTION

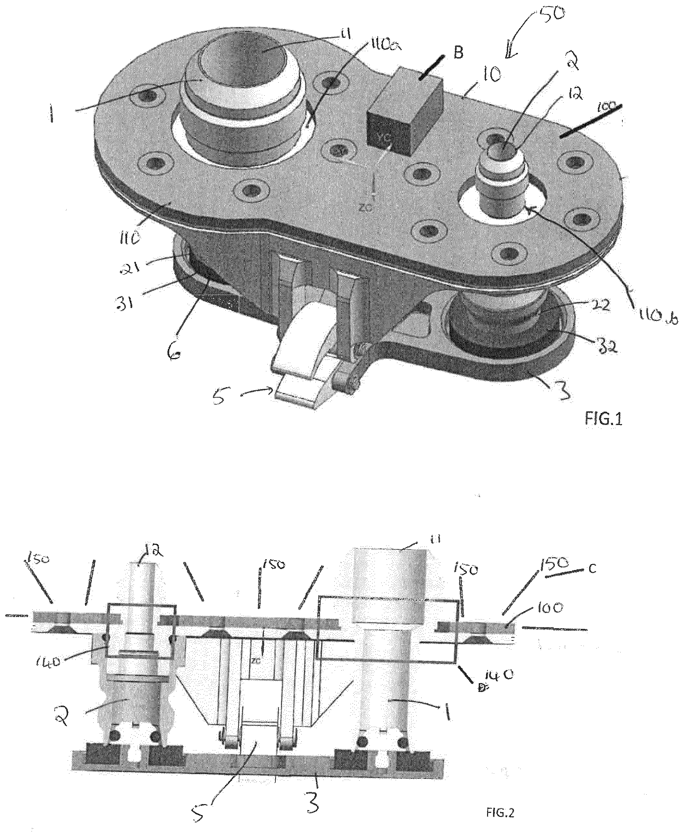

By way of background, an example of a known port closure assembly 50 will first be described, with reference to Figs. 1 and 2.

In this assembly, a fill port 1 and an overflow port 2 are provided in a housing 10. These will be in fluid connection at a first end 11, 21 with the storage tank or other vessel to be filled via the fill port. The second end 12 of the fill port 1 is provided with a respective fitting 31 configured to be fluidly connected to a fill line (not shown) when the tank is being filled. The second end 22 of the overflow port 2 is provided with a fitting configured to be fluidly connected to an overflow line (not shown). A cap 3 is provided to cover the second ends 12, 22 of the fill and overflow ports in the closed state. In the example shown, a single cap is provided that covers both ports 1, 2 as this simplifies the closing operation by the user and reduces the risk of a port being inadvertently left open after filling. Other known assemblies have a separate cap for each port.

The cap 3 is mounted to the assembly housing 10 by a hinge arrangement (not shown) adjacent the second ends of the ports, and is provided with a lever and latch mechanism 5 to open and close the cap 3. The inner surface of the cap, that comes into contact with the second end of the port(s) when closed, is preferably provided with a seal 6. An additional seal, such as an O-ring seal (not shown), may also be provided around the second end of the port(s).

The Figures show the assembly viewed from the bottom, as the present disclosure focuses on the heater assembly, which can best be seen when the port assembly is viewed from underneath.

Typically, a heater such as a silicone heater 100 is provided in the form of a silicone structure 110 e.g. a plate or sheet shaped to fit over the lower surface of the housing 10, and having openings 110a, 110b through which the ports extend. Electrical wires (not shown) are formed within the silicone structure which, due to their electrical resistance, generate heat in the silicone structure 110 when power is applied to the wires. Typically, a power source 120 is mounted to the silicone structure (here shown on the bottom surface of the silicone structure).

Because of the structure of the known heater, some of the heat that is generated is emitted to the atmosphere in a direction away from the housing and parts of the fill port to be heated. This is lost heat and the structure is, therefore, inefficient and wastes power. This can be seen in Fig. 2 which shows the fill port assembly and heater from a side view (again inverted from the usual orientation of the assembly in use, to better show the heater). The critical areas of the assembly that need to be heated are shown by rectangles 140. These are the areas where residual water can accumulate after it has been supplied to the tank via the fill port. At low temperatures, this can freeze and thus block the flow of water at the next filling operation. Whilst the heater 100 does heat those areas, the current heaters transfer heat in all directions, including directions 150 that do not play any role in freeze protection. This is, therefore, wasted heat and makes the heater inefficient. These inefficiencies mean that in order to provide sufficient heating to the critical areas, a bigger power supply will be needed due to the wasted heat or, alternatively, for a given size of power supply, insufficient heat will be provided to the critical areas.

Another problem with these conventional heaters is that, if the silicone structure 110 is damaged e.g. during filling, the entire heater assembly will need to be replaced including the wires and the power supply. Further, because the heater assembly is formed as a plate to be attached to the housing, it must be accurately machined and positioned during assembly to avoid further inefficiencies and non-aligned edges that can cause damage.

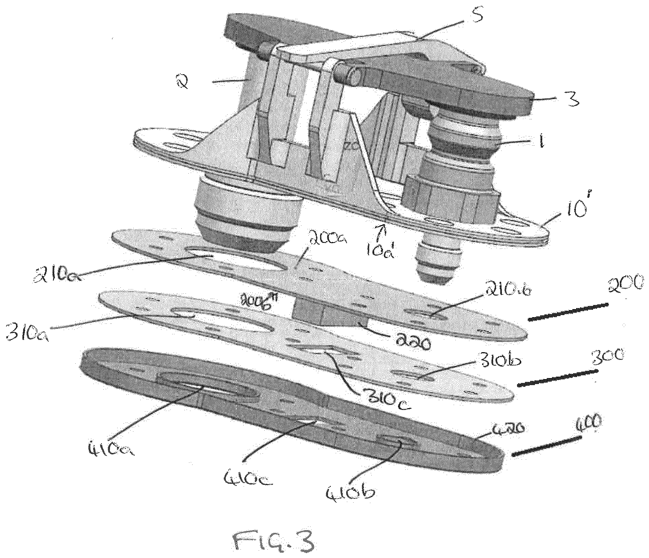

The solution provided by this disclosure provides a more efficient heater assembly for a fill port, that avoids these problems and can be manufactured and assembled easily, quickly and at lower cost. The solution provided in this disclosure will now be described with reference to Figs. 3 to 8.

The core of the disclosure is a heater assembly comprising three discrete parts that replace the silicone structure 110 of the known heater solutions described above. The fill port assembly to which the heater assembly is mounted is otherwise the same as the conventional assembly as described above.

Again, the solution will be described with reference to a port assembly having a fill port and an overflow port on a single housing, and having a hinged cap. It should be noted, however, that the heater assembly could be used with different port assemblies including, but not limited to assemblies having a single port or even more than two ports, and assemblies having no cap or caps having a different configuration. These features are not relevant to the disclosure and will not be described further in any detail.

The heater assembly according to the disclosure comprises three parts 200, 300, 400 configured to be assembled to a housing 10 of a port assembly. The three parts include a first part 200 in the form of a pcb board provided with electrically conductive tracks (not shown in Fig. 3 but described further below) that generate heat when power is applied to the tracks. The pcb board is shaped to substantially match the shape of the housing 10' to which the heater assembly is to be assembled. One or more openings 210a, 210b are formed through the pcb board 200 through which one or more ports extending from the housing 10' can pass. The shape of the pcb board and the shape, size and number of openings can be varied depending on the design of the fill port assembly to which the heater is to be assembled. A power supply 220 is electrically connected to the pcb board 200 to provide power to the electrically conductive tracks. In use, the pcb board is located against the bottom surface 10a' of the housing 10'. Preferably, one surface 200a of the pcb board, in use, lies flat against the bottom surface 10a' of the housing and the power supply 220 is attached to the opposite, second surface 200b of the pcb board.

The second part of the heater assembly is a heat reflection plate 300 which has substantially the same shape and size as the pcb board 200 and is arranged to be assembled, in use such that one surface 300a thereof, lies, preferably flat, against the second surface 200b of the pcb board. Again, depending on the design of the fill port assembly with which the heater assembly is to be used, the heat reflection plate 300 will be formed with one or more openings 310a, 31 0b, matching the opening(s) in the pcb board. If the power supply 220 extends from the second surface 200b of the pcb board, the heat reflection plate 300 preferably has an opening 310c of a shape and size to enable the power supply to fit through the opening so that the heat reflection plate can lie flat against the pcb board without obstruction by the power supply 220.

The third part of the heater assembly is a heater assembly housing 400 that has substantially the same shape and size as the pcb board 200 and the heat reflection plate 300, with openings 410a, 410b that match the openings in the heat reflection plate, so that, when assembled, the heater assembly housing 400 can fit over and lie substantially flat against and aligned with the heat reflection plate and the pcb board. When assembled the three parts 200, 300, 400 are stacked such that the pcb board lies between the fill port housing 10' and the heat reflection plate 300, and the heat reflection plate is between the pcb board and the heater assembly housing 400.

The heater assembly housing 400 is preferably made of a flexible or resilient material or a heat shrink material and defines an outer edge 420 around the periphery of the heater element housing 400, so that the heater assembly housing can be tightly fitted over the heat reflection plate and the pcb board and, in use, the fill port housing securing the heater assembly to the fill port assembly. In other words, the outer edge 420 will fit tightly to secure the heater assembly housing to the fill port housing with the pcb board and the heat reflection plate secured therebetween.

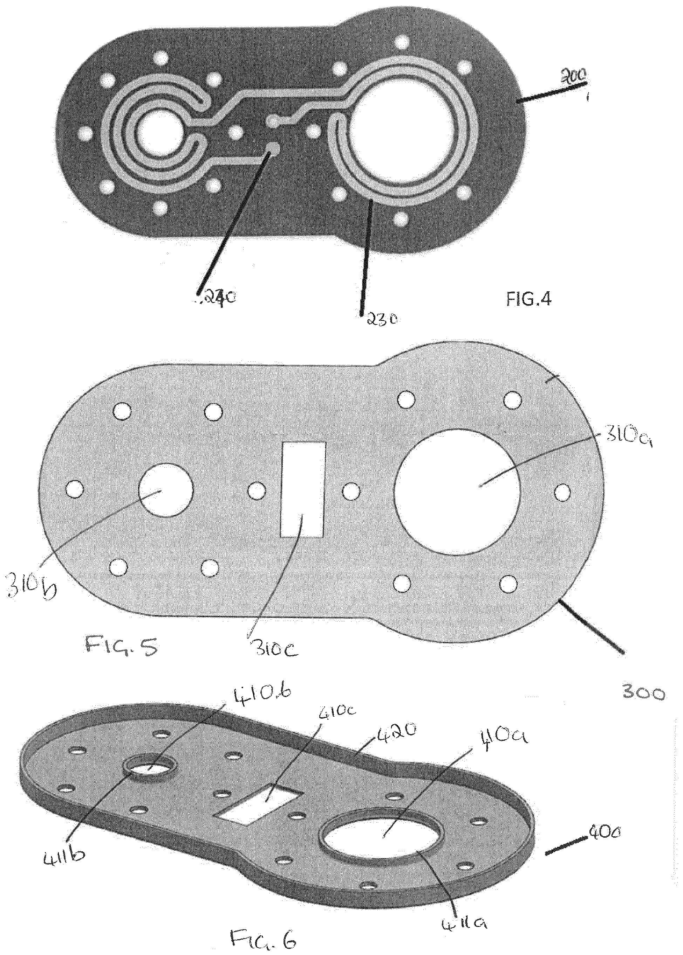

Figure 4 shows, in more detail, an example of a pcb board 200 that could be used in the heater assembly of the disclosure. Electrically conductive tracks 230 are provided in a pattern on the pcb board selected to provide heating at the critical areas, depending on the design of the fill port assembly to which the heater assembly is to be assembled. In this case, tracks are provided around the openings 210a, 210b through which the fill and overflow ports will pass, to provide heating around the ports, in use. Other patterns of track could be used for different applications. Connection points 240 e.g. solder joints are provided at the ends of the tracks 230 by which a power supply 220 can be electrically connected to the tracks to provide current through the tracks which generates heat. The tracks may be made of any suitable conductive material e.g. copper.

An example of the heat reflection plate is shown in Fig. 5. This should be designed to reflect any heat generated by the electrically conductive tracks in a direction away from the housing 10'. In one example, the heat reflection plate 300 will have substantially the same shape and size as the pcb board for maximum efficiency, although in other examples, the heat reflection plate may have a different shape and/or size than the pcb board. It is feasible that the heat reflection plate may be smaller than the pcb board (i.e. define a smaller footprint) and is sized to be located at particular locations of the pcb board e.g. only where the electrically conductive tracks are provided. For simplicity, though, the heat reflection plate is shown here as matching the pcb board in terms of shape and dimensions. The heat reflection plate is provided to reflect heat from the pcb board tracks in a desired direction (i.e. towards the fill port assembly) and can be made of any heat reflective material. In one example, the heat reflection pate may be made of aluminium foil and PMF foam but other materials may also be suitable.

Figure 6 shows an example of a heat assembly housing 400. The shape and size of the housing should closely match that of the assembly housing to which the heater is to be mounted. The housing is preferably in the form of a substantially flat sheet having a peripheral upstanding edge 420. In the example shown, openings 410a, 410b formed to receive the fill and overflow ports may also be formed with upstanding edges 411a, 411b to provide sealing around the ports, when assembled.

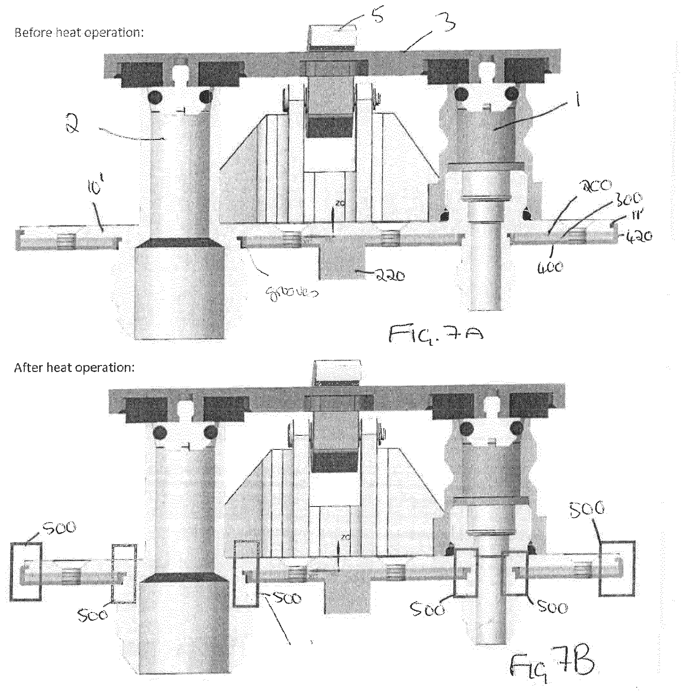

The heater assembly housing is made of a material that allows it to be fitted over and form a tight fit with the housing of the fill port assembly, with the pcb board and the heat reflection plate secured in a tightly fitted stack, between the heater assembly housing and the fill port housing. The material may be any elastic or plastic or other resilient material that allows the heater assembly housing to be so fitted. In one example, the heater assembly housing is made of heat shrink material e.g. of the type that is commonly used as a sheath of an electrical wire. Such materials can be easily cut and shaped and allow a tight fitting by heat shrinkage. This can be seen in the example illustrated in Figs. 7A and 7B (which now show the fill port assembly in the orientation (i.e. with the cap at the top), as it would usually be mounted).

Fig. 7A shows the assembly with the parts of the heater assembly 200, 300, 400 assembled to the bottom 10a' of the fill port assembly housing 10', with the pcb board 200 adjacent the housing 10', then the heat reflection plate 300 and then the heater assembly housing 400. The edge 420 of the heater assembly housing contains the pcb board and heat reflection plate and fits over or into a groove 11' in the edge of the fill port assembly housing 10'. Where present, the openings in the heater assembly housing around the fill and/or overflow ports are also provided with edges which align with edges or grooves around the respective ports in the fill port assembly.

To secure the heater assembly to the fill port assembly, the material of the heater assembly housing is heated which causes the material to shrink and secure into the grooves or around the edges of the fill port assembly housing as shown in Fig. 7B at the areas marked 500. The material then sets into locking engagement with the fill port assembly containing the other heater parts within the area defined by the heater assembly housing and its edge. Such heat shrink attachment avoids the need for the various parts to be precisely aligned during assembly.

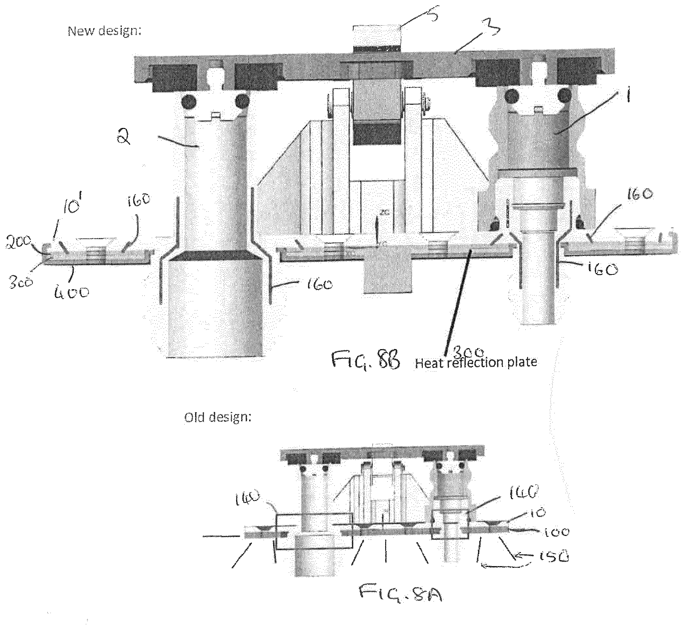

The improvements in heat transfer efficiency using a heater assembly according to this disclosure can be see, by way of example, in Figs. 8A and 8B. In Fig. 8A, using a conventional heater, as described above with reference to Fig. 2, when power is applied to the heater, heat is generated at the critical areas 140 150, but also radiates away from those areas as wasted heat. In contrast, as seen in Fig. 8B, because of the enclose heater structure (the pcb board 200), and the presence of the heat reflection plate 300, within the tightly fitted heater assembly housing 400, the heat is directed only to those places where it is effective in preventing freezing (see lines 160) and so is contained within the assembly.

The solution of this disclosure, therefore, provides a much more efficient heater with relatively reduced energy consumption. Further. In the event of failure of a heat assembly part, only the damaged part needs to be replaced rather than the whole assembly. Assembly is simple and quick and does not require precise manufacture and assembly procedures. Further, because of the modular design, the parts of the heater assembly can be easily adapted for use with other fill port assembly designs e.g. by using a different pattern of tracks, different sized openings, etc.

## Claims

1. A heater assembly comprising three discrete components assembled in a stack, the three discrete components comprising:
a printed circuit board, pcb, (200) on which are provided electrically conductive tracks (230) which generate heat when electric power is applied to the tracks, the pcb having a first major surface (200a) and a second, opposite, major surface (200b) and a periphery joining the first and second major surfaces;
a heat reflective plate (300); and
a heater assembly housing (400);
wherein the heat reflective plate is sandwiched between the pcb and the heater assembly housing and where the heater assembly housing is configured to fit over the heat reflective plate and the periphery of the pcb to form a closely fitted stack of the three discrete components.

2. The heater assembly of claim 1, wherein the heater assembly housing (400) is formed of a flexible sheet having a peripheral edge (420), the flexible sheet sized and shaped to match the size and shape of the pcb and the peripheral edge having a height to fit over and secure to the periphery of the pcb with the heat reflective plate sandwiched between the pcb and the heater assembly housing.

3. The heater assembly of claim 1 or 2, wherein the heater assembly housing is formed of a flexible resilient material.

4. The heater assembly of claim 3, wherein the heater assembly housing is formed of a heat shrink material.

5. The heater assembly of any preceding claim, wherein the heat reflective plate has a surface area size and shape to match the size and shape of the surface area defined by the second major surface of the pcb or defines a surface area smaller than that defined by the second major surface of the pcb.

6. The heater assembly of any preceding claim, where the surface area of the heat reflective plate is sized and shaped such to cover the conductive tracks on the pcb.

7. The heater assembly of any preceding claim, where one or more openings (210a, 210b) is formed through the pcb from the first major surface to the second major surface, and wherein a corresponding one or more openings (410a, 410b) is provided in the heat reflective plate and the heater assembly housing.

8. The heater assembly of any preceding claim, further comprising a power supply (220) for providing power to the electrically conductive tracks.

9. The heater assembly of claim 8, wherein the power supply is mounted to the second major surface of the pcb and wherein an opening is provided in the heater assembly housing through which the power supply extends.

10. The heater assembly of any preceding claim, wherein the heat reflective plate is formed of a heat reflective material, optionally aluminium foil.

11. A fill port assembly comprising a housing having one or more openings therethrough and one or more fill ports extending through the one or more openings, and a heater assembly as claimed in any preceding claim mounted to the fill port assembly housing.

12. A fill port assembly as claimed in claim 11, wherein the fill port assembly housing has an upper surface and a lower surface joined b a fill port housing peripheral edge, and wherein the heater assembly is mounted such that the pcb lies against the lower surface and the heater assembly housing is fitted around the fill port housing peripheral edge to secure the heater assembly to the fill port assembly housing.

13. A method of mounting a heater assembly as claimed in any of claims 1 to 10 to a fill port assembly having a housing (10') with one or more openings through which one or more fill ports (100, 200) extend, the method comprising mounting the heater assembly to a lower surface (10a') of the fill port assembly housing such that the first major surface of the pcb lies against the lower surface and the conductive tracks are positioned to provide heating around the one or more fill ports, and securing the heater assembly housing to the fill port assembly housing at a peripheral edge thereof.

14. The method of claim 13, wherein the step of securing the heater assembly housing comprises applying heat to the heater assembly housing to heat shrink the heater assembly housing around the fill port housing.
